# EUROPÄISCHE PATENTANMELDUNG

(11) **EP 2 597 347 A1**
(43) Veröffentlichungstag der Anmeldung: **29.05.2013**
(21) Anmeldenummer: 12184163.9
(22) Anmeldetag: 13.09.2012
(51) Int. Cl.: F16L 33/23

(54) **Schlaucheinband für einen Druckschlauch**

(30) Priorität: 23.11.2011 DE 202011108191 U
(71) Anmelder: AWG Fittings GmbH, 89537 Giengen/Brenz (DE)
(72) Erfinder: Ambrosi, Johann, 89542 Herbrechtingen (DE)
(74) Vertreter: Dr. Weitzel & Partner

(57) **Zusammenfassung**

Die Erfindung betrifft ein Schlaucheinband (10) für einen Druckschlauch (12), insbesondere für einen großvolumigen Feuerwehrschlauch an einer Schlauchkupplung, mit einem Schlauchstutzen (14) , der mit einem ersten axialen Ende (18) mit einer Schlauchkupplung, insbesondere einer Storz-Kupplung oder einer auf dem System Storz basierenden modifizierten Schnellkupplung, verbindbar und mit einem zweiten axialen Ende (20) in den Schlauch (12) einführbar ist, und einem Sicherungselement (16), insbesondere einem Segmentring, zum radialen Verpressen des Schlauches auf dem Schlauchstutzen. Die Erfindung ist dadurch gekennzeichnet, dass in Axialrichtung auf der vom ersten axialen Ende des Schlauchstutzens abgewandten Seite des Sicherungselements ein Entlastungselement (30) so angeordnet ist, dass der Schlauch zwischen dem zweiten axialen Ende des Schlauchstutzens und dem Entlastungselement durchführbar ist.

## Beschreibung

Die Erfindung betrifft einen Schlaucheinband für einen Druckschlauch, insbesondere für einen großvolumigen Feuerwehrschlauch an einer Schlauchkupplung. Die Erfindung betrifft ferner ein Schlaucheinbandsystem zum Verbinden eines Druckschlauches mit einer Kupplung.

Ein Schlaucheinband ermöglicht im Zusammenwirken mit einem passenden Schlauchstutzen eine kraftschlüssige Verbindung zwischen einem Schlauch als flexible Leitung und einer starren Kupplung. Bei der Löschwasserbeförderung im Feuerwehrwesen sind es häufig Sturz-Kupplungen oder auf dem System Sturzbasierende modifizierte Schnellkupplungen, die mit unterschiedlich ausgebildeten Schlauchstutzen bestückt sind, um wiederum mit darauf abgestimmten Einbandsystemen eine sichere und feste Verbindung zum Schlauch herzustellen.

Die flexibelste Art der Schlaucheinbindung ist der Außeneinband, bei dem ein profilierter Stutzen passend zum Innendurchmesser des Schlauches in diesen geschoben wird und über dem Außendurchmesser des Schlauches ringförmig angeordnete Sicherungselemente eine reib- und teilweise formschlüssige Verbindung herstellen, indem der Durchmesser der Sicherungselemente durch tangentiale Krafteinwirkung verkleinert wird, sodass eine radiale Verpressung des Schlauches auf dem unnachgiebigen Stutzen erreicht wird.

Geeignete Klemmelemente sind zum Beispiel ein in mehreren aneinander gelegten Windungen festgezogener und mit den Enden verdrillter Draht, eine über eine Schneckenwelle betätigte selbsthemmende Schlauchschelle und ein mittels einer Spannvorrichtung festgezogenes und über umgebogene Enden gesichertes Metallband. Für großvolumige Druckschläuche wird jedoch am häufigsten ein aus Segmenten zusammengesetzter Ring benutzt, dessen anfänglich größere Abstände zwischen den Segmentenden durch tangentiale Schraubenkräfte verringert werden. Ein bekanntes Schlaucheinbandsystem mit einem solchen Segmentring wird später im detaillierten Teil der Beschreibung näher erläutert.

Spezielle Brandschutzsysteme für große technische Anlagen wie Raffinerien und Flughäfen oder Notwasserversorgungen in Katastrophengebieten erfordern enorme Wassermengen und dementsprechend große Leitungsquerschnitte für deren Förderung. Dafür werden Schläuche mit Durchmessern von 6 Zoll (152 mm) bis 12 Zoll (305 mm) eingesetzt, die dem bei der Feuerwehr üblichen Arbeitsdruck bis 16 bar standhalten müssen.

Neben dieser Forderung an die Druckfestigkeit sind bei Druckkupplungen Schlaucheinbandsysteme mit kurzen Einbindelängen im Hinblick auf die Flexibilität beim Verstauen wünschenswert. Außerdem vereinfacht die damit verbundene Gewichtsreduzierung auch die Handhabung der großvolumigen Schlauchleitungen. Die Schläuche werden ebenfalls aus Gewichtsgründen möglichst dünnwandig gehalten. Insbesondere wird für die das tragende Gewebe umgebenden inneren und äußeren Schichten auf Gummi- und/oder Kunststoffbasis eine möglichst geringe Materialdicke angestrebt. Für einen sicheren Einband auf einer kurzen Einbindelänge entstehen somit große spezifische Verpressungen, die latent lokale Beschädigungen des Schlauchmaterials in sich bergen, die sich fatalerweise erst unter Einsatzbedingungen durch Undichtheit oder im schlimmeren Fall durch Bersten mit erheblichem Gefahrenpotential enttarnen. Insbesondere können bei Verwendung eines Segmentrings Beschädigungen des Schlauches durch das Kippmoment entstehen, das durch den sich unter hohem Innendruck aufweitenden Schlauch erzeugt wird.

Aufgabe der Erfindung ist es, mit einem Schlaucheinbandsystem unter Verwendung eines Segmentrings auf einem kurzen Schlauchstutzen eine sichere und druckdichte Verbindung eines Druckschlauches mit einer Kupplung zu ermöglichen.

Gelost wird diese Aufgabe durch einen Schlaucheinband mit den Merkmalen des Anspruchs 1 sowie durch ein Schlaucheinbandsystem mit den Merkmalen des Anspruchs 10. Vorteilhafte und zweckmäßige Ausgestaltungen des erfindungsgemäßen Schlaucheinbands und des erfindungsgemäßen Schlaucheinbandsystems sind in den zugehörigen Unteransprüchen angegeben.

Der erfindungsgemäße Schlaucheinband für einen Druckschlauch, insbesondere für einen großvolumigen Feuerwehrschlauch an einer Schlauchkupplung, umfasst einen Schlauchstutzen, der mit einem ersten axialen Ende mit einer Schlauchkupplung, insbesondere einer Storz-Kupplung oder einer auf dem System Storz-basierenden modifizierten Schnellkupplung, verbindbar und mit einem zweiten axialen Ende in den Druckschlauch einführbar ist. Der Schlaucheinband umfasst ferner ein Sicherungselement, insbesondere einen Segmentring, zum radialen Verpressen des Schlauches auf dem Schlauchstutzen. Gemäß der Erfindung ist in Axialrichtung auf der vom ersten axialen Ende des Schlauchstutzens abgewandten Seite des Sicherungselements ein Entlastungselement so angeordnet, dass der Schlauch zwischen dem zweiten axialen Ende des Schlauchstutzens und dem Entlastungselement durchführbar ist.

Die Erfindung beruht auf der Erkenntnis, dass bei hohen Drücken durch die Aufweitung des Schlauches Beschädigungen am Schlauch nicht nur durch den Kontakt des Schlauches mit der stirnseitigen Kante des Sicherungselements entstehen können, sondern auch durch Kräfte oder Kippmomente, die vom sich aufweitenden Schlauch auf das Sicherungselement und von dort zurück auf den Schlauch, genauer gesagt auf den unter dem Sicherungselement liegenden verpressten Schlauchabschnitt, übertragen werden. Das erfindungsgemäß vorgesehene Entlastungselement ermöglicht es nun, das Sicherungselement vom sich wölbenden Schlauch soweit zu entkoppeln, dass eine solche Kraftbeziehungsweise Kippmomentübertragung auf das Sicherungselement nicht mehr möglich ist. Das Entlastungselement nimmt die Kräfte durch den Innendruck und des sich wölbenden Schlauches auf und kann diese großflächig auf einen nicht verpressten oder umgelenkten Schlauchabschnitt zurückübertragen.

Die erfindungsgemäße Konstruktion erlaubt es, speziell bei der Schlauchgröße 12 Zoll, Drücke von 16 bar und mehr im Schlauch zu haben, ohne dass der verpresste Schlauchabschnitt im Einbindungsbereich lokal beschädigt wird und ohne dass eine erweiterte Profilierung des Schlauchstutzens und des Sicherungselements notwendig wäre. Mit dem erfindungsgemäßen Aufbau reicht eine verhältnismäßig kurze Einbandlänge aus, um den Schlauch sicher und fest auf dem Schlauchstutzen zu halten.

Gemäß einer bevorzugten Ausgestaltung des Entlastungselements ist ein Innenrand auf der vom ersten axialen Ende des Schlauchstutzens abgewandten Seite des Entlastungselements, gegen den der Schlauch bei ansteigendem Druck gedrückt wird, konvex ausgebildet ist, insbesondere mit einer stark ausgeprägten Rundung. Eine solche Ausgestaltung stellt sicher, dass der sich wölbende Schlauch keine abrupte Querschnittsänderung erfährt und nicht gegen eine scharfe Kante gedrückt wird. Stattdessen bietet das Entlastungselement eine große Anlagefläche für den Schlauch, sodass es nicht zu einer lokalen Konzentration der übertragenen Kraft kommt.

Jenseits des stirnseitigen Rands des zweiten Schlauchstutzenendes darf sich der Schlauch aufweiten, ohne dass dadurch der Reib- oder Kraftschluss des Schlaucheinbandendes geschwächt oder aufgehoben wird. Demnach ist eine Anordnung des Entlastungselements sinnvoll, bei der der Innenrand des Entlastungselements etwa über dem stirnseitigen Rand des zweiten Schlauchstutzenendes angeordnet ist.

Damit etwaige durch Formänderung des Entlastungselements auf den Schlauch zurückübertragenen Kräfte nicht zu lokalen Überbelastungen führen, sollte die Innenseite des Entlastungselements wenigstens abschnittsweise eine nicht profilierte Anlagefläche für den Schlauch darstellen. Dadurch ist sichergestellt, dass sich die Kräfte großflächig verteilen können.

In einer besonders bevorzugten Ausführungsform der Erfindung ist das Entlastungselement ein Ring, der vorzugsweise in Umfangsrichtung geschlossen ist. Die erfindungsgemäße Vorgabe, dass der Schlauch zwischen dem zweiten axialen Ende des Schlauchstutzens und dem Entlastungselement durchführbar sein muss, lässt sich bei einem Ring leicht umsetzen, indem der Innendurchmesser des Rings so gewählt wird, dass zwischen dem zylindrischen Außenumfang des zweiten Schlauchstutzenendes und der Innenseite des Rings ein Ringspalt verbleibt, der der Wanddicke des Schlauches entspricht.

Da das Entlastungselement im Gegensatz zum Sicherungselement nicht radial einwärts gegen den Schlauch gedrückt wird, muss das Entlastungselement speziell im drucklosen Zustand des Schlauches, wenn dieser also auch nicht radial auswärts gegen das Sicherungselement drückt, gegen eine axiale Verschiebung gesichert werden. Dies kann zweckmäßig durch eine axiale Anbindung des Entlastungselements an das am Schlauchstutzen gehaltene Sicherungselement bewerkstelligt werden.

Eine solche axiale Anbindung kann in vorteilhafter Weise durch einen axialen Vorsprung des Sicherungselements, welcher auf der vom ersten axialen Ende des Schlauchstutzens abgewandten Seite des Sicherungselements vorgesehen ist, hergestellt werden, wobei dieser Vorsprung das Entlastungselement zumindest teilweise überdeckt.

Insbesondere kann vorgesehen sein, dass auf der Innenseite des Vorsprungs ein Hinterschnitt gebildet ist, in den ein Abschnitt des Entlastungselements eingreift. Eine solcher Formschluss kann bei der Herstellung des Schlaucheinbands erreicht werden, indem das Sicherungselement erst dann durch Verringerung seines Durchmessers den Schlauch gegen den Schlauchstutzen presst, nachdem der Abschnitt des Entlastungselements axial unter den Hinterschnitt des Sicherungselements geschoben wurde.

Gemäß einer bevorzugten Ausgestaltung des Schlauchstutzens weist dieser an seinem zweiten axialen Ende nur eine einzige Profilrippe auf, sodass der verpresste Schlauchabschnitt möglichst wenig Umlenkungen hat, welche Ausgangspunkte für lokale Beschädigungen des Schlauches sein können. Außerdem ermöglicht das Vorsehen von nur einer Profilrippe einen in Axialrichtung sehr kurz bauenden Schlauchstutzen.

Die Erfindung schafft ferner ein Schlaucheinbandsystem zum Verbinden eines Druckschlauches mit einer Kupplung, wobei das Schlaucheinbandsystem einen Druckschlauch und einen erfindungsgemäßen Schlaucheinband umfasst.

Zu den Vorteilen eines solchen Schlaucheinbandsystems kann auf die obigen Ausführungen verwiesen werden.

Weitere Merkmale und Vorteile der Erfindung ergeben sich aus der nachfolgenden Beschreibung und aus den beigefügten Zeichnungen, auf die Bezug genommen wird. In den Zeichnungen zeigen:
- Figur 1: einen Axialschnitt eines nicht-erfindungsgemäßen Schlaucheinbandsystems;
- Figur 2: einen Axialschnitt eines erfindungsgemäßen Schlaucheinbandsystems;
- Figur 3: eine perspektivische Ansicht des erfindungsgemäßen Schlaucheinbandsystems ohne Schlauch; und
- Figur 4: eine perspektivische Ansicht des Segmentrings des erfindungsgemäßen Schlaucheinbandsystems.

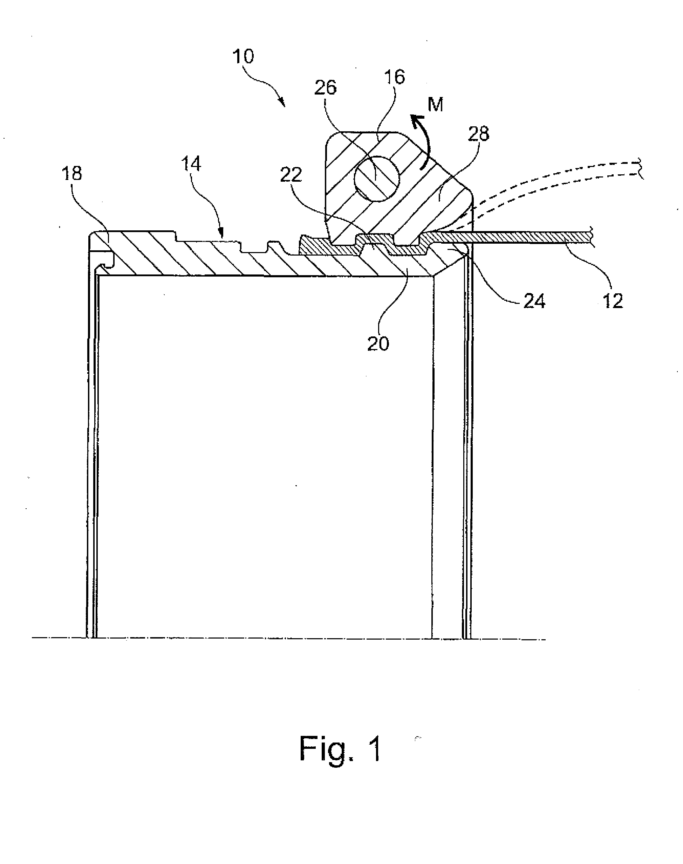

In Figur 1 ist ein herkömmliches Schlaucheinbandsystem 10, wie es für großvolumige Druckschläuche im Feuerwehrwesen mit Durchmessern von bis zu 12 Zoll verwendet wird, in einer Schnittansicht dargestellt. Das Schlaucheinbandsystem 10 umfasst neben einem flexiblen Druckschlauch 12, einen im Wesentlichen zylindrischen, starren Schlauchstutzen 14 und ein Sicherungselement in Form eines Segmentrings 16.

Der Außendurchmesser des Schlauchstutzens 14 und der Innendurchmesser des Schlauches 12 sind so aufeinander abgestimmt, dass der Schlauch 12, genauer gesagt dessen Einbandende, gerade auf den Schlauchstutzen 14 aufgezogen werden kann. Der Schlauchstutzen 14 ist nicht vollständig in den Schlauch 12 eingeführt, sodass ein erstes axiales Ende 18 des Schlauchstutzens 14 vom Schlauch 12 vorsteht. Dieses erste Ende 18 ist so ausgebildet, dass der Schlauchstutzen 14 an eine Kupplung, insbesondere eine Storz-Kupplung, angeschlossen werden kann. Das entgegengesetzte, in den Schlauch 12 eingeführte zweite axiale Ende 20 des Schlauchstutzens 14 weist zwei umlaufende Profilrippen 22, 24 auf. Eine dieser Profilrippen 24 bildet einen stirnseitigen Außenbund des zweiten Schlauchstutzenendes 20.

Der Segmentring 16 ist aus mehreren Segmenten zusammengesetzt, die durch Schraube-Mutter-Verbindungen mit dem jeweils in Umfangsrichtung benachbarten Segment verbunden sind. Der Abstand zwischen zwei Segmenten in Umfangsrichtung kann durch Anziehen der entsprechenden Schraube 26 verringert werden. Die Form und Anordnung der Segmente und die Schraube-Mutter-Verbindungen sind so ausgelegt, dass die Verringerung des Abstands der Segmente in Umfangsrichtung zwangsläufig eine Verringerung des Durchmessers des Segmentrings 16 bewirkt.

Der Segmentring 16 ist über dem zweiten Ende 20 des Schlauchstutzens 14 und dem darauf aufgeschobenen Einbandende des Schlauches 12 angeordnet. Durch die oben beschriebene Verringerung des Segmentringdurchmessers wird eine radiale Verpressung des flexiblen Schlauches 12 auf dem starren Stutzen 14 erreicht. Die profilierte Innenseite des Segmentrings 16 ist so auf die Profilrippen 22, 24 des Schlauchstutzens 14 abgestimmt, dass durch die radiale Verpressung eine reib- und teilweise formschlüssige Verbindung hergestellt wird. Der Schlauch 12 ist im verpressten Zustand aufgrund der Profilierungen des Schlauchstutzens 14 und des Segmentrings 16 an seinem Einbandende mehrfach umgelenkt, was zwar einerseits die Abzugskraft grundsätzlich erhöht; andererseits bedeutet jede Umlenkung eine lokale Schwächung des Schlauchmaterials.

Auf seiner vom ersten Ende 18 des Schlauchstutzens 14 abgewandten Stirnseite weist der Segmentring 16, genauer gesagt jedes seiner Segmente, einen axialen Vorsprung 28 mit einer abgerundeten Kante auf. Bei einem hohen Druck im Schlauch 12 wölbt sich dieser nach außen, wie durch die gestrichelten Linien in Figur 1 dargestellt. Der Schlauch 12 drückt dabei gegen die Innenseite des Vorsprungs 28 und erzeugt dadurch ein unerwünschtes Kippmoment M auf den Segmentring 16 um eine sich durch die Schraubenlagerung einstellende Achse. Das Kippmoment M hat zur Folge, dass der zwischen den beiden Profilrippen 22, 24 des Schlauchstutzens 14 liegende Schlauchabschnitt entlastet und deshalb nur noch mit einer geringeren radialen Andruckkraft festgehalten wird. Gleichzeitig wird der verpresste Schlauchabschnitt auf der dem ersten Schlauchstutzenende 18 zugewandten Seite der ersten Profilrippe 22 durch das Kippmoment M entsprechend höher belastet. Diese Umstände können dazu führen, dass es bei einem Überschreiten einer kritischen Druckgrenze zu lokalen Beschädigungen des Schlauches 12 im Einbandbereich kommt.

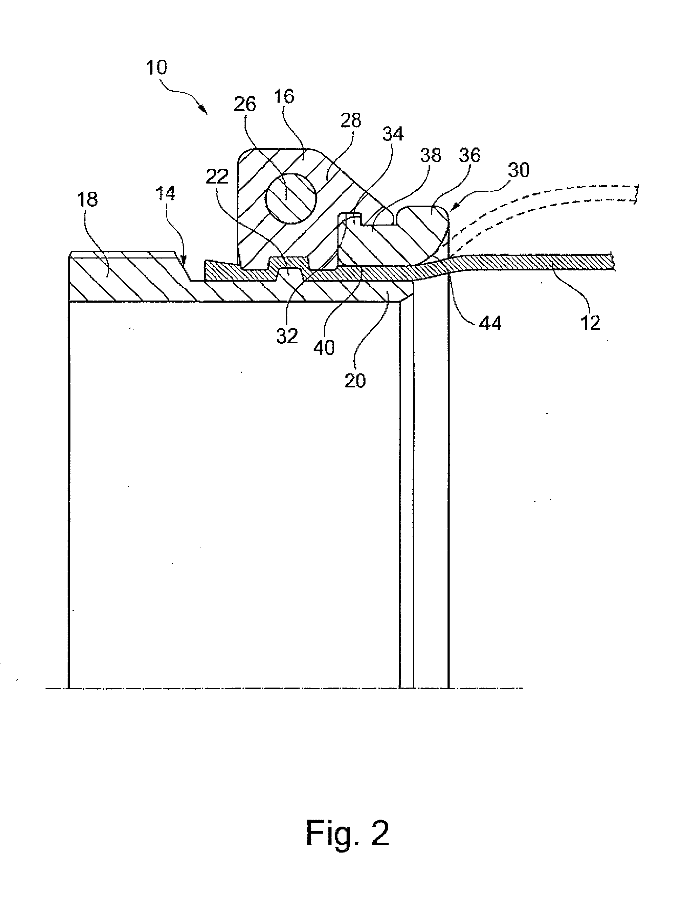

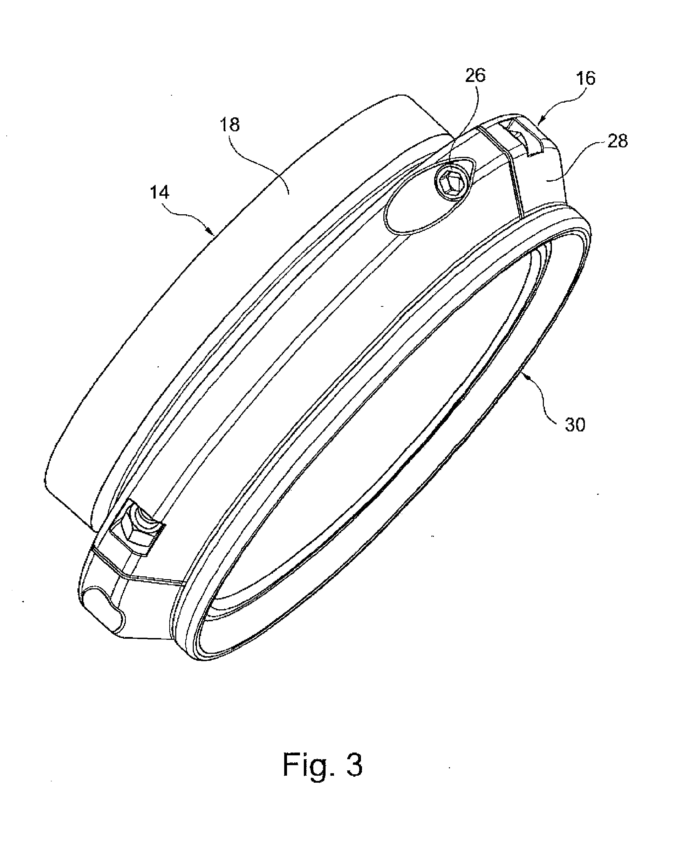

Fig. 2 zeigt in einer der Figur 1 entsprechenden Schnittansicht ein Schlaucheinbandsystem 10, das gegenüber dem zuvor beschriebenen System modifiziert und außerdem für einen Anschluss an eine Festkupplung mit Innengewinde ausgelegt ist. Figur 3 zeigt das Schlaucheinbandsystem 10 aus Figur 2 ohne Schlauch 12 in einer perspektivischen Darstellung. Für diejenigen Bauteile und Komponenten, die dem in Figur 1 gezeigten System entsprechen, wurden die gleichen Bezugszeichen verwendet, und es wird insoweit auf die obigen Erläuterungen verwiesen.

Das modifizierte Schlaucheinbandsystem 10 unterscheidet sich in der Ausgestaltung des zweiten Endes 20 des Schlauchstutzens 14 und des Segmentrings 16. Darüber hinaus ist ein zusätzliches Entlastungselement in Form eines in Umfangsrichtung geschlossenen Rings 30 vorgesehen. Diese Unterschiede und deren Wirkung werden nachfolgend genauer beschrieben.

Der Schlauchstutzen 14 weist nur noch eine Profilrippe 22 auf; an der Stirnseite des zweiten Endes 20 ist keine Profilrippe mehr vorgesehen. Zwischen dem Schlauchstutzen 14 und dem Segmentring 16 erfährt das Einbandende des Schlauches 12 im verpressten Zustand somit weniger lokale Umlenkungen.

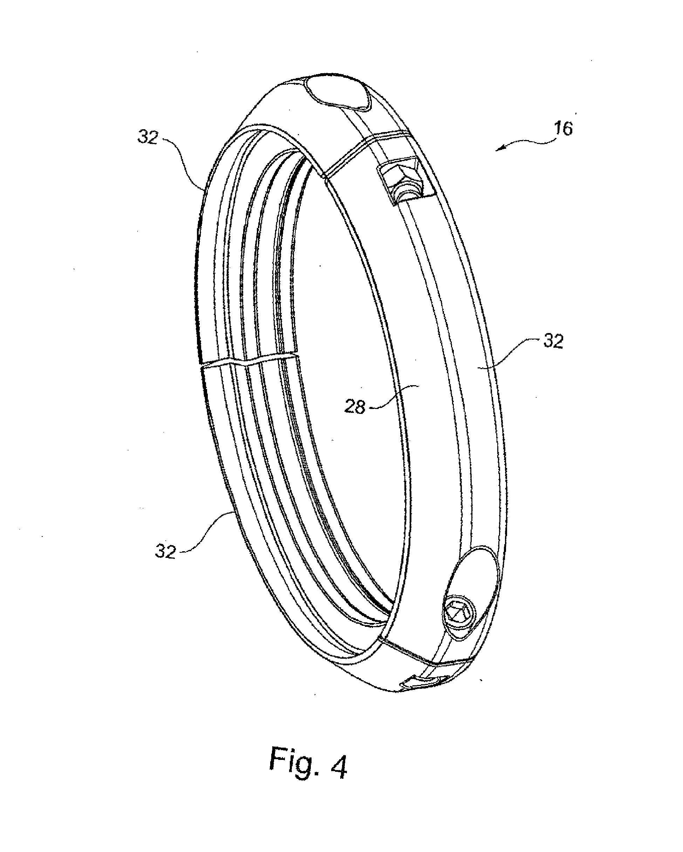

Der Segmentring 16 weist weiterhin einen Vorsprung 28 auf; die Innenseite des Vorsprungs 28 ist jedoch nicht abgerundet, sondern verläuft parallel zur Mittelachse des Schlauchstutzens 14 mit einem Hinterschnitt 32, der eine Art umlaufende Nut bildet. Die genaue Gestaltung der Segmente 34 und der Schraube-Mutter-Verbindungen des Segmentrings 16 ist aus Fig. 4 ersichtlich, in der der Segmentring 16 einzeln dargestellt ist.

Der zusätzlich vorgesehene geschlossene Ring 30 hat einen Innendurchmesser, der um so viel größer als der Außendurchmesser des Schlauchstutzens 14 ist, dass in den verbleibenden Ringspalt genau der Schlauch 12 hineinpasst.

Das Profil und die Anordnung des geschlossenen Rings 30 gehen aus Figur 2 hervor. Der Ring 30 kann in Axialrichtung im Wesentlichen in drei Abschnitte unterteilt werden: einen dem ersten Schlauchstutzenende 18 zugewandten ersten Endabschnitt 36, einen entgegengesetzten zweiten Endabschnitt 38 und einen Mittelabschnitt 40 zwischen den beiden Endabschnitten 36, 38.

Der geschlossene Ring 30 ist so platziert, dass der Mittelabschnitt 40 in radialer Richtung zwischen dem Vorsprung 28 des Segmentrings 16 und dem Schlauchabschnitt angeordnet ist, der auf dem zweiten Schlauchstutzenende 20 liegt. Der Innendurchmesser des geschlossenen Rings 30 ist wenigstens im Mittelabschnitt 40 konstant, sodass der Ring dort eine relativ große, nicht profilierte Anlagefläche 42 für den Schlauch 12 bietet.

Der erste Endabschnitt 34 hat gegenüber dem Mittelabschnitt 40 einen größeren Außendurchmesser. Der so gebildete Außenbund des geschlossenen Rings 30 greift in den Hinterschnitt 32 beziehungsweise die Nut des Segmentrings 16 ein. Diese Anordnung kann erreicht werden, indem nach dem Aufsetzen des Segmentrings 16 auf den Schlauchstutzen 14 mit noch großem Durchmesser der vorher über den Schlauch 12 geschobene geschlossene Ring 30 unter den Vorsprung 28 des Segmentrings 16 geschoben wird Beim Festziehen der Segmente 34 wird dann der Formschluss zwischen den Nuten der Segmente 34 und dem Außenbund des geschlossenen Rings 30 hergestellt.

Der zweite Endabschnitt 38 hat im Vergleich zum Mittelabschnitt 40 ebenfalls einen größeren Durchmesser. Somit ist auf der Außenseite des geschlossenen Rings 30 eine umlaufende Außennut gebildet, in die ein radial einwärts gerichteter Abschnitt des axialen Vorsprungs 28 des Segmentrings 16 eingreift.

Der stirnseitige Innenrand 44 des zweiten Endabschnitts 38 ist konvex gestaltet mit einer stark ausgeprägten Rundung (großer Rundungsradius). Im Vergleich zum Schlaucheinbandsystem der Figur 1 sitzt der Segmentring 16 hier etwas weiter vom zweiten Schlauchstutzenende 20 entfernt, sodass der zweite Endabschnitt 38 des geschlossenen Rings 30 mit dem abgerundeten Innenrand 44 etwa über dem stirnseitigen Rand des zweiten Schlauchstutzenendes 20 liegt.

Bei einem Druckanstieg im Schlauch 12 ermöglicht der stark abgerundete Innenrand 44 des geschlossenen Rings 30 eine "sanfte" Wölbung des Schlauches 12, das heißt der gegen die Rundung gedrückte Schlauchabschnitt erfährt keine sprunghafte Aufweitung. Die Anordnung des geschlossenen Rings 30 zwischen dem sich wölbenden Schlauchabschnitt und dem Segmentring 16 hat zur Folge, dass kein Kippmoment auf den Segmentring 16 übertragen wird. Es wird somit keine zusätzliche radiale Kraft vom Segmentring 16 auf den unter dem Segmentring 16 liegenden verpressten Abschnitt des Schlaucheinbandendes ausgeübt. Eventuelle vom sich wölbenden Schlauch 12 am geschlossenen Ring 30 durch Formänderung erzeugte Kräfte auf den Schlauch 12 würden aufgrund der großen Anlagefläche 40 entsprechend großflächig verteilt, sodass lokale Überbelastungen weitestgehend ausgeschlossen sind.

Beim modifizierten Aufbau des Schlaucheinbandsystems 10 mit dem zusätzlichen geschlossenen Ring 30 genügt die eine umlaufende Profilrippe 22 am Schlauchstutzen 14, um den Segmentring 16 axial in Position zu halten. Für die ebenfalls notwendige Sicherung des geschlossenen Rings 30 gegen eine axiale Verschiebung sorgt der in den Hinterschnitt 32 des Segmentrings 16 eingreifende erste Endabschnitt 36 des geschlossenen Rings 30, der eine axiale Anbindung des geschlossenen Rings 30 an den Segmentring 16 herstellt. Eine solche axiale Anbindung kann alternativ auch über mehrere Schraubenelemente erfolgen, deren Achsen axial, radial oder passend zu einer speziellen Segmentkontur auch schräg angeordnet sein können.

Obwohl der Schlaucheinband 10 in Figur 2 für den Anschluss an eine Festkupplung mit Innengewinde ausgelegt ist, kann das erste Ende 18 des Schlauchstutzens selbstverständlich auch für den Anschluss an andere Kupplungstypen, insbesondere eine Storz-Kupplung oder eine auf dem System Storz basierende modifizierte Schnellkupplung, konfiguriert sein.

### Bezugszeichenliste

- 10: Schlaucheinbandsystem
- 12: Schlauch
- 14: Schlauchstutzen
- 16: Sicherungselement (Segmentring)
- 18: erstes axiales Ende des Schlauchstutzens
- 20: zweites axiales Ende des Schlauchstutzens
- 22: erste Profilrippe
- 24: zweite Profilrippe
- 26: Schraube
- 28: Vorsprung
- 30: Entlastungselement (geschlossener Ring)
- 32: Hinterschnitt (Nut)
- 34: Segment
- 36: erster Endabschnitt des Entlastungselements (Außenbund)
- 38: zweiter Endabschnitt des Entlastungselements
- 40: Mittelabschnitt des Entlastungselements
- 42: Anlagefläche
- 44: Innenrand des zweiten Endabschnitts des Entlastungselements

## Patentansprüche

1. Schlaucheinband (10) für einen Druckschlauch (12), insbesondere für einen großvolumigen Feuerwehrschlauch an einer Schlauchkupplung, mit einem Schlauchstutzen (14), der mit einem ersten axialen Ende (18) mit einer Schlauchkupplung, insbesondere einer Storz-Kupplung oder einer auf dem System Storz basierenden modifizierten Schnellkupplung, verbindbar und mit einem zweiten axialen Ende (20) in den Schlauch (12) einführbar ist, und einem Sicherungselement (16), insbesondere einem Segmentring, zum radialen Verpressen des Schlauches (12) auf dem Schlauchstutzen (14), **dadurch gekennzeichnet, dass** in Axialrichtung auf der vom ersten axialen Ende (18) des Schlauchstutzens (14) abgewandten Seite des Sicherungselements (16) ein Entlastungselement (30) so angeordnet ist, dass der Schlauch (12) zwischen dem zweiten axialen Ende (20) des Schlauchstutzens (14) und dem Entlastungselement (30) durchführbar ist.

2. Schlaucheinband (10) nach Anspruch 1, **dadurch gekennzeichnet, dass** ein Innenrand (44) auf der vom ersten axialen Ende (18) des Schlauchstutzens (14) abgewandten Seite des Entlastungselements (30), gegen den der Schlauch (12) bei ansteigendem Druck gedrückt wird, konvex ausgebildet ist, insbesondere mit einer stark ausgeprägten Rundung.

3. Schlaucheinband (10) nach Anspruch 2, **dadurch gekennzeichnet, dass** der Innenrand (44) des Entlastungselements (30) etwa über dem stirnseitigen Rand des zweiten axialen Schlauchstutzenendes (20) angeordnet ist.

4. Schlaucheinband (10) nach einem der vorhergehenden Ansprüche, **dadurch gekennzeichnet, dass** die Innenseite des Entlastungselements (30) wenigstens abschnittsweise eine nicht profilierte Anlagefläche (40) für den Schlauch (12) darstellt.

5. Schlaucheinband (10) nach einem der vorhergehenden Ansprüche, **dadurch gekennzeichnet, dass** das Entlastungselement (30) ein Ring ist, der vorzugsweise in Umfangsrichtung geschlossen ist.

6. Schlaucheinband (10) nach einem der vorhergehenden Ansprüche, **dadurch gekennzeichnet, dass** das Entlastungselement (30) axial an das Sicherungselement (16) angebunden ist.

7. Schlaucheinband (10) nach Anspruch 6, **dadurch gekennzeichnet, dass** das Sicherungselement (16) auf der vom ersten axialen Ende (18) des Schlauchstutzens (14) abgewandten Seite einen axialen Vorsprung (28) aufweist, der das Entlastungselement (30) zumindest teilweise überdeckt.

8. Schlaucheinband (10) nach Anspruch 7, **dadurch gekennzeichnet, dass** auf der Innenseite des Vorsprungs (28) ein Hinterschnitt (32) gebildet ist, in den ein Abschnitt (36) des Entlastungselements (30) eingreift.

9. Schlaucheinband (10) nach einem der vorhergehenden Ansprüche, **dadurch gekennzeichnet, dass** der Schlauchstutzen (14) an seinem zweiten axialen Ende (20) nur eine einzige Profilrippe (22) aufweist.

10. Schlaucheinbandsystem zum Verbinden eines Druckschlauches (12) mit einer Kupplung, mit einem Druckschlauch (12) und einem Schlaucheinband (10) nach einem der vorhergehenden Ansprüche.
